## Europäisches Patentamt

(19) **European Patent Office**

**Office européen des brevets**

(11) Publication number: **0 004 427**
**A1**

## (12) EUROPEAN PATENT APPLICATION

(21) Application number: **79300359.1**

(22) Date of filing: **08.03.79**

(51) Int. Cl.²: **F 16 H 47/04, B 62 D 11/12**

(30) Priority: **21.03.78 US 888647**

(43) Date of publication of application: **03.10.79**
**Bulletin 79/20**

(84) Designated Contracting States: **DE FR GB NL SE**

(71) Applicant: **GENERAL ELECTRIC COMPANY, 1 River Road, Schenectady New York (US)**

(72) Inventor: **Reed, Oliver Bradley, 59 Sherwood Drive, Pittsfield Massachusetts 01201 (US)**

(74) Representative: **Wood, Anthony Charles et al, c/o MICHAEL BURNSIDE & PARTNERS 2 Serjeants' Inn Fleet Street, London EC4Y 1HL (GB)**

(54) **Four forward range hydromechanical steering transmission.**

(57) Power is delivered through input gears (12), (15), and (17) to variable speed hydraulic pump-motor drives (18) and (20) which independently drive left and right output shafts (14) and (16) through planetary gear sets (23) and (25). In a first speed range, the ring gears (23R) and (25R) of the output gear sets (23) and (25) are held stationary by associated gears (42, 43, 38, and 48) by selectively operable brakes (11). In a second speed range, an average of the speeds of the hydraulic pump motor drives (18) and (20) is obtained from planetary gear set (21) and drives, through a gear train (21R, 41, and 40), the sun gear (36s) of an additional range planetary gear set (36). Another input is provided to gear set (36) by the driving of the carrier (36c) by the carrier of an associated planetary gear set (28) which is driven from input gear (12) in a gear reduction mode when the ring gear of planetary set (28) is selectively engaged by a brake (31). The combined inputs to planetary gear (36) drive gear (38) and gears (42) and (44) to apply an additional speed component to the output gear sets (23) and (25) through the ring gears (23R) and (25R). In a third speed range, a different speed is applied to the ring gears (23R, 25R) by a drive through selectively engageable clutch (46) from input gear (12) to gear (48) and thus to gears (42, 43). In a fourth speed range, a clutch (7) is selected for engagement to lock up planetary set (28) to provide a direct drive from gear (12) to the carrier (36c) of additional range planetary set (36) for combina-tion with the output from gear set (21) to provide still another range of speeds to the ring gear (23R, 25R) to provide a fourth range of output speeds.

# FOUR FORWARD RANGE HYDROMECHANICAL STEERING TRANSMISSION

This invention pertains to multi-range hydromechanical steering transmissions for track laying vehicles wherein shifts between ranges are accomplished by the relatively simultaneous activation of a brake or clutch controlling operation in one range and the deactivation of the brake or clutch controlling another range. Within this category referred to as synchronous shifting steering transmissions, this invention more specifically pertains to those transmissions having hydraulic components to provide continuously variable drive ratios such as a pump/motor circuit and mechanical components, wherein either or both the hydraulic and mechanical components operate in the various ranges to provide multiple speed/power ratios. More specifically, the invention pertains to a multi-range steering transmission wherein steering is accomplished by means of differential right and left output speed in an infinitely variable first range and wherein multiple ranging is achieved by means of combining different additional component outputs with the first range output at the right and left output drives without detracting from the right and left speed differences provided for steering.

In particular, this invention constitutes an improvement over the invention disclosed in U.S. patent specification No. 3,815,698 which is sometimes referred to below as "Reed I". Reed I was invented by the same inventor who made the present invention. Reed I discloses a transmission which can be categorized as a steering transmission having one hydrostatic range which provides for both forward and reverse propulsion and for a steering differential output because it contains two (right and left) hydrostatic units. In addition, the basic transmission of Reed I includes components providing two additional distinct forward hydromechanical ranges in each of which a different mechanical input derived from the transmission mechanical input is combined with the output of the hydrostatic component.

The present invention provides an improved four forward range hydromechanical steering transmission based on the three forward range transmission disclosed in Reed I. The improvement is the extension of the range of the transmission through use of some of the same gearing in an additional mode to produce an additional hydromechanical speed range and is accomplished by use of an additional element in the mechanical gearing to cause reduction gearing which is used in a first ratio in one range to be used in a new second, different ratio to produce the added speed range.

FIG. 1 is a diagrammatic view of a transmission similar to that disclosed in Reed I (U.S. patent specification No. 3,815,698) and incorporating one embodiment of the present invention.

FIG. 2 is a graphic display of variations of the capacity of the hydraulic pumps and the resulting variations of hydraulic motor speed plotted as the ordinate versus transmission output speed in the various speed ranges plotted as the abscissa, with significant abscissa scale values expressed in terms of speed in kilometers per hour for a typical vehicle in which the transmission is installed.

FIG. 3 is a diagrammatic view of the second and fourth forward range portion of the transmission of FIG. 1 modified to incorporate an alternate embodiment of the invention.

FIG. 4 is a diagrammatic view of the second and fourth forward range portion of the transmission of FIG. 1, further modified to incorporate another alternative embodiment of the invention.

FIG. 5 is an end sectional view of a planetary gearing arrangement utilized in the transmissions of FIGS. 1, 3, and 4.

FIG. 6 is an end sectional view showing details of the special planetary gearing 21 of FIG. 1, which functions as a speed averaging device.

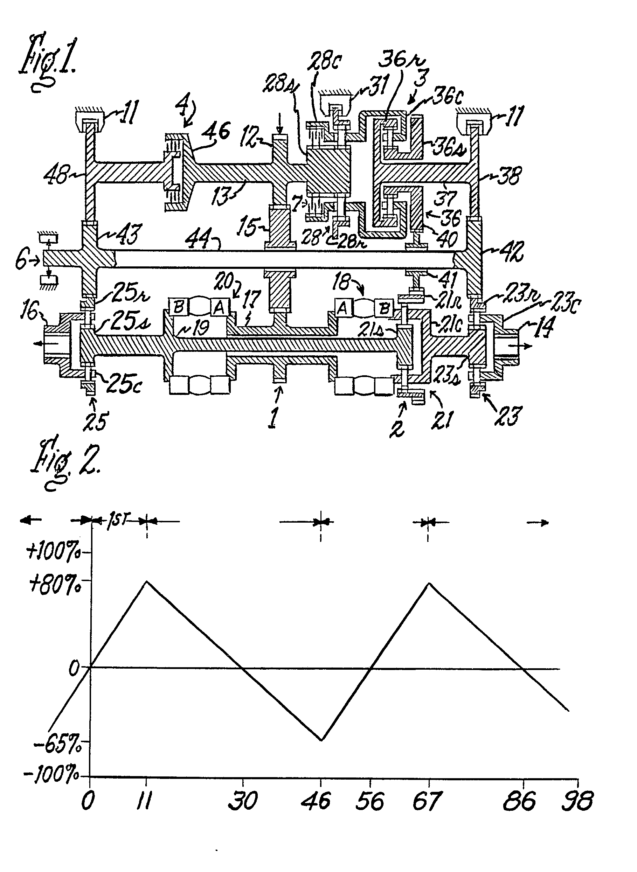

A particular improvement of the present invention over Reed I resides in the provision of an additional hydromechanical forward range to constitute a four forward range transmission. The transmission, modified in accordance with this invention, is illustrated in FIG. 1 which generally corresponds to FIG. 1 of Reed I. Reference numbers applied to planetary gear sets in the present drawings use the standard designations of "s" for sun gear, "r" for ring gear and "c" for planetary carrier. The transmission has one hydrostatic range providing first and reverse speeds and three hydromechanical ranges including second, third and the new fourth forward speed range. This transmission includes an input for mechanical power in the form of gear train 12, 15 and 17 and has right and left output drives 14 and 16. The first and reverse range is hydrostatic and is powered by two hydraulic components 18 and 20 wherein the "A" units are hydraulic pumps and the "B"

- 4 -

units are hydraulic motors. Components 18 and 20 and 21 are sometimes referred to collectively hereinafter as "an infinitely variable drive and steer component", or as a "hydrostatic component". Although the hydraulic components in this particular transmission are ball piston pump ("A" unit) and motor ("B" unit) combinations, they could be of any kind in which at least one of the units in each component has a variable capacity. In the preferred embodiment as described in this application, the "A" units, the pumps, are variable displacement and the "B" units, the motors, are fixed displacement. The hydraulic motors drive the sun gears of output planetary gear units 23 and 25, operating against ring gears 23r, 25r to drive outputs 14 and 16 which are attached to the planetary gear carriers of units 23 and 25. The hydraulic motors ("B" units) also drive two elements (sun and carrier) of the planetary gear set 21 which constitutes a speed averaging device 2 (gear set 21). In the first and reverse range, which is hydrostatic, brakes 11 are actuated to immobilize gears 38, 48, 42 and 43, thereby locking the ring gears of the output planetary units 23 and 25 to provide reaction points to cause the suns to drive the planet gears and carriers. As shown in Reed I, a brake can be made to act directly on the cross shaft 44 or an attachment thereto to obtain the same result. First and reverse speeds are selected by reversal of the direction of rotation of the hydraulic components as indicated by the extension of the first range output line in FIG. 2 to the left through the zero speed point in a negative speed direction. This indicates a reverse movement of the "B" units of the two hydraulic components 18 and 20 in response to a negative setting (stroking) of the "A" unit pumps causing a similar reverse action of outputs 14 and 16 to provide reverse speed.

Steering is provided within the first and reverse range mechanism by the fact that a slight variation in the setting of the two pumps ("A" units) will cause a corresponding difference in speed between the motors ("B" units), between their output planetary sun gears, and between the outputs 14 and 16. The amount of turn is proportional to the difference in setting between the "A" units; and a full forward stroke on one with a full reverse on the other will provide for a pivot turn of the vehicle.

Third range differs from first range in operation solely by the fact that with the first range brakes 11 released and the third range clutch 46 engaged, there is a mechanical input through the third range drive 4 which, driving through gears 48 and 43, causes shaft 44 and gears 42 and 43 to drive the ring gears of·planetary gear sets 23 and 25 in a direction to add a forward speed to outputs 14 and 16. Since power is most commonly furnished in these systems by a diesel engine, the control system, under normal operation, provides an almost constant speed through the mechanical third range gear train 4 so that speed variation in third range as well as output speed difference for steering is accomplished through the infinitely variable hydraulic units 18 and 20.

In both first and third ranges, an increase in output speed is accomplished by increasing the speed of the "B" units to increase the "forward" speed of the carriers 23c and 25c and outputs 14, 16. The steering is the same in both ranges in that an increase of speed in the positive direction of a "B" unit is accompanied by an increase of speed in its associated (right or left) output.

Second range is based on the concept of driving the ring gears 23r and 25r of the output planetary gear sets 23 and 25 at speeds between zero in first range and the constant speed of operation in third range. This is accomplished by second range gearing 3 which is activated by brake 31 to secure the ring gear in planetary set 28 to the housing so as to cause the mechanical input of the sun gear 28s of 28 to drive the carrier 28c of 28 at a sun to carrier reduction in speed. Carrier 28c is connected directly to and drives carrier 36c of planetary set 36 which is a second (sometimes referred to as the outer) planetary set of second range gearing 3. The sun 36s of 36 is driven through gear 40 and idler gear 41 by the ring gear 21r of planetary set 21. The combination of inputs to the carrier and sun gears of gear set 36 provides an output on the ring gear through 37, gear 38, gear 42, shaft 44, and gear 43 to the ring gears 23r and 25r of the output gear sets 23 and 25.

Planetary set 21, as a speed averaging device driven by both "B" units, provides on ring gear 21r the summation or average of the "B" speeds of hydraulic components 18 and 20 and thereby measures the propulsive speed contribution of the hydrostatic stage while canceling out the speed difference used for steering. This is explained further at the end of the specification. The ring gear of planetary set 36, therefore, is driven hydromechanically as a resultant of the inputs of 36c and 36s from zero which is the speed of gear 38 in first range to a speed which is that of gear 38 in third range which is approximately the same as the input speed of gear 12. If the speed of carrier 36c is retained relatively constant, the speed of ring gear 36r increases as the speed of sun 36s decreases. Sun 36s, driven by the "B" units, has its maximum positive (forward) speeds at the top transmission speeds in first and third ranges (see FIG. 2). Therefore, ratios are chosen for planetary sets 28 and 36 so that the speed of ring 36r is zero at the maximum "B" unit speed in first range and is equal to the input speed (as slightly reduced by the 12, 48, 43 gear train) at both the maximum "B" unit speed in third range and at the desired maximum reverse "B" unit speed in second range so as to be able to accomplish the synchronous shifts effected by application of brakes 11 and 31 and clutches 4 and 7 (FIG. 1) respectively.

In accordance with the present invention, the transmission according to Reed I was modified and improved by incorporation of the following features. The gear ratios of the gear train elements (21,41,40) interconnecting the "B" units of the hydrostatic component and sun gear 36s are designed to precisely compensate for both the reduction in gearing between input gear 12 and the "A" units, and the reduction in the hydrostatic component at the maximum allowed positive stroke so that the sun gears 28s and 36s run at the same speed when the hydrostatic component is running at that maximum allowed positive stroke (80%). Gears 38 and 48 are the same, and gears 42 and 43 are the same. Therefore, in the third range, when clutch 46 is engaged, the gear 38 is incidentally driven from input gear 12 through clutch 46 and gears 48, 43, and 42 at the same speed as the input gear 12 and the sun gear 28s. Accordingly, the ring gear of planetary set 36, which is driven through shaft 37 by gear 38, also rotates at the same speed as the sun gear 28s which is the same speed as the sun gear 36s of planetary set 36 at maximum positive stroke. This means that planetary set 36 is "locked up" having no relative rotation between the sun gear and ring gear) so that the carrier 36c and the attached carrier 28c of the respective gear sets 36 and 28 are rotating at the same speed as the sun gear 28s. The improvement also includes a clutch 7 which can be engaged under the above-mentioned condition to lock the carrier 28c and the sun gear 28s together to accomplish a synchronous shift into a fourth gear range. At this point, clutch 46 is disengaged to discontinue the third range, and the speed of sun gear 36s is then decreased by de-stroking the "A" units to provide an increase in speed of ring gear 36R. This is partially explainable by equation (1) which defines the general behaviour of a planetary gear set:

$$(1) \quad +RPM_s \cdot \left( \frac{Ts}{Ts + Tr} \right) + RPM_r \cdot \left( \frac{Tr}{Ts + Tr} \right) = +RPM_c$$

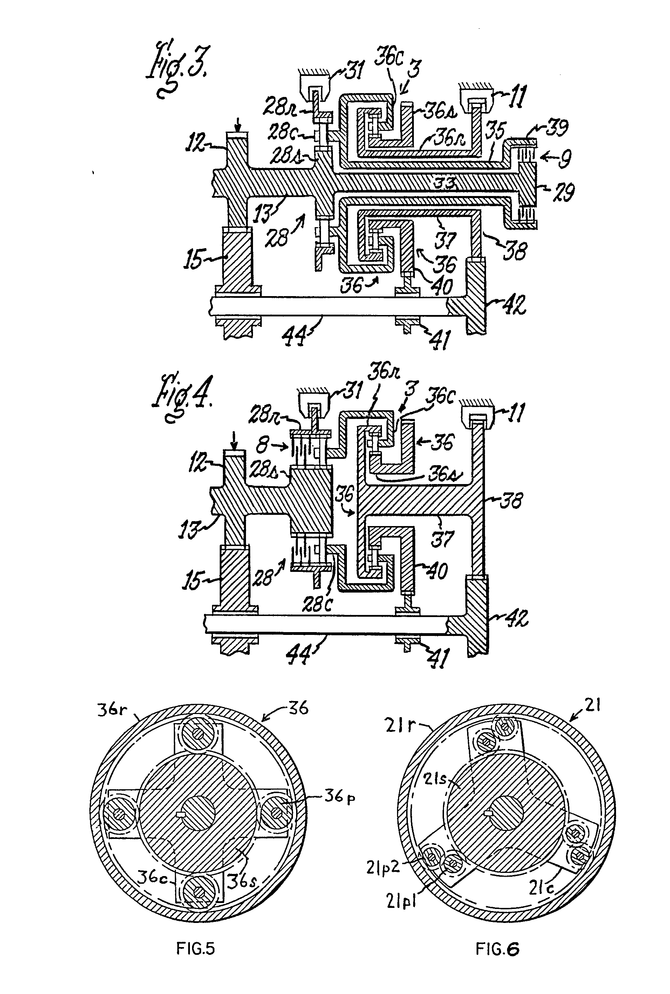

(where T = number of teeth, s = sun, r = ring, c = carrier, and the + sign indicates direction of rotation -- say clockwise looking upon FIG. 5). From equation (1) it is obvious that in any instance in which a carrier is operated at a constant speed, a change in speed of either the sun or ring gear must be accompanied by a corresponding (according to the ratio) opposite change in speed of the other. Even though the decrease of speed of the "B" units in such additional range results in a corresponding slowing of the output sun gears 23s, 25s, the ratios of sets 36 and 23 and 25 are inherently such that there is a net acceleration in carriers 23c and 25c. Equation (1) and FIG. 5 are discussed further below.

Appreciation of this invention can be enhanced by a review of the operation of the improved transmission. As depicted in FIG. 1, the transmission includes an input gear train by which a power plant driving gear 12 drives the "A" units which are variable capacity hydraulic pumps in the hydrostatic components 18 and 20. In the first and reverse range, with brakes 11 set and the "A" units set to the idle position, i.e., the position in which no oil is being forced into the "B" units, the transmission is operating or idling at the position shown at the intercept of the graph line in FIG. 2 with the zero point. Stroking (changing capacity) of the "A" units identically in each unit in either direction, will cause the "B" units to start to turn in a corresponding direction and cause movement along the operation line in FIGURE 2 in either direction from zero. Assuming the stroking of the "A" units to cause movement of the "B" units in the forward direction, the "B" units drive the sun gears 23s and 25s of the output systems so as to drive the outputs 14 and 16 which are attached to carriers 23c and 25c in a forward direction at a sun to carrier reduction from the speed of the hydraulic motors, i.e., the "B" units. Acceleration is possible up to the full capacity of the hydrostatic components 18 and 20 but for design considerations are arbitrarily limited to a range as, for example, the +80% to -65% shown in FIGURE 2. The gear ratios are selected so that when the "B" units reach 80% of the capacity speed in first range, sun gear 36s of the second range component 3 is running at its maximum design speed which is the same as the speed of sun 28s and is driving carriers 36c and 28c against ring gear 36r which is locked in a stationary position by its connection to the brakes 11. Under these conditions, ring gear 28r conforms to ring gear 36r and is, therefore, stationary permitting the engagement of the brake 31.

Engagement of brake 31 permits the synchronous release of brakes 11 without change of output speed. The transmission is then operating in second range and the stroking of the "A" units in the opposite direction causes a slowing of the "B" units and sun gear 36s which, because of a constant input speed in carrier 36c (at sun to carrier reduction from input by set 28), also causes ring gear 36r and the gear train 38, 42, shaft 44, gear 43 and the two output ring gears 23r and 25r to accelerate in response to the slowing of the "B" units. As the rings 23r and 25r accelerate, the acceleration is more than enough to overcome the slowing of the sun gears 23s and 25s (also driven by the "B" units) producing a net acceleration of the output hubs 14 and 16 so that the transmission operates along the second range line in FIGURE 2. A stroking of the "A" units to a negative 65% of stroke causing the "B" units to be running backwards at 65% of capacity places the transmission in the condition that the cross shaft 44 and all of the gearing attached to it including the output rings 23r and 25r are running at a speed corresponding to a direct gearing from input. At that point, third range clutch 4 can be synchronously engaged and brake 31 released without interfering with the vehicular speed to place the transmission in third range with the "B" units and sun 36s running backwards at 65% of capacity. The stroking of the "A" units in the positive direction operates the transmission along the line indicated in FIGURE 2 for third range slowing the speed of the "B" units to zero and then accelerating the "B" units in the positive direction. This is accompanied by an "acceleration" of sun gears 23s and 25s in the positive direction as the speed of the planetary carrier in a planetary set is equal to the sums of the weighted speeds of the sun and ring gears where the weighting is the ratio of the planetary set. Acceleration of the "B" units to the 80% point places the transmission in the condition in which sun gear 36c is running at the same speed as sun gear 28s as previously explained. Since the third range clutch at 4 is engaged, ring gear 36r is also running at the same input speed and consequently the entire second range gear component 3 is turning as a unit at input speed. Under these conditions, a synchronous shift can be made by engaging clutch 7 as indicated in FIGURE 1 which, by clutching the carrier 28c to the sun 28s, locks up the entire planetary set 28 and causes the carrier 28c to drive the carrier 36c at input speed. With clutch 4 released, the transmission is in the new fourth range and a deceleration of sun 36s by destroking the "A" units and slowing the "B" units causes the transmission to operate along the line indicated for the fourth range in FIGURE 2 by the acceleration of ring gear 36r, gear 38, gear 42, the cross shaft, and the output ring gears 23r and 25r. Because the carrier speed of carriers 23c and 25c is equal to the sum of the weighted speeds of sun and ring and the weighting recognizes that the ring gear makes the major contribution, the acceleration of the ring gears 23r and 25r overcomes the slowing of suns 23s and 25s to produce a net increase of speed of the outputs 14 and 16.

The additional fourth range which is the subject of this invention constitutes a substantial improvement over the transmission as disclosed in Reed I in that it can provide an enhancement on the order of one-third as measured by speed with very little increase in size or weight. This improvement results primarily from making additional uses of components already existing in the mechanism. The graph of FIG. 2 describes the outputs of the preferred embodiment of the transmission and represents the performance of an actual transmission. A transmission according to Reed I as applied to a 19,000 kilogram vehicle operates at the speeds in the first three ranges as indicated in FIG. 2. That transmission, in the three range configuration, weighs approximately 800 kilograms and the modification as illustrated in FIG. 1 to provide the additional fourth range weighs only about 50 kilograms more, an increase of less than 6% in transmission weight and an almost negligible increase in vehicle weight to increase the maximum road speed by one-third. On the other hand, by changing the gear ratios of the vehicle final drive, a transmission of this same size and weight, i.e., under 1000 kilograms, could be used to drive a much heavier vehicle (as much as one-third heavier or over 23,000 kilograms) to a top speed in the range of 64 kilometers an hour.

Although FIG. 1 represents the preferred embodiment of this invention and is the version most likely to be used, there are other contemplated implementations within the requirement that planetary set 28 be locked up by means of a clutch to cause the entire planetary set 28 to revolve as a unit when driven by an input placed on sun gear 28s. FIGS. 3 and 4 illustrate other feasible implementations of that requirement. FIG. 3 is an implementation in which a clutch to lock the carrier 28c to the sun 28s can be accomplished by an exterior location of the clutch and may have utility in the modification of existing transmissions made according to the design disclosed in Reed I. FIG. 4 provides a slightly different implementation in that clutch 8 is used to lock the ring gear 28r to the sun gear 28s. The invention also can be implemented by locking carrier 28c to the ring gear 28r, but this is a less efficient means of implementation because it requires a heavier clutch.

Equation (1), appearing earlier in the specification, applies to FIG. 5, which is a replica of FIG. 5 of Reed I. Although FIG. 5 is presented as the planetary gear set 36, it is applicable also to the other planetary gear sets utilized in this invention, with the exception of gear set 21, for which FIG. 6 is applicable. The gear set of FIG. 5 is of standard construction and requires no special explanation. In equation (1), the input variables are $RPM_s$ and $RPM_r$, and the output variable is $RPM_c$.

For the speed averaging device 2, that is, gear set 21, it is intended that $RPM_c$ and $RPM_s$ be the input variables, and of equal weight, and $RPM_r$ is the output variable.

To satisfy such input-output relation, the planetary gear set illustrated in FIG. 6 is used rather than that of FIG. 5. FIG. 6 is a replica of FIG. 4 of the Reed I patent. As shown in FIG. 6, there is provided an inner set of planetary gears 21p1 and an outer set of planetary gears 21p2. Each gear of the inner set 21p1 meshes with the associated sun gear and also meshes with one gear of the outer set of planetary gears 21p2. Each one of the outer planetary gears 21p2 meshes with the associated ring gear 21r. These planetary gears 21p1 and 21p2 may also be referred to as pinion gears, which is the term used for them in the Reed I patent. The gear train of FIG. 6 obeys the following relationship:

$$(2) \quad +RPM_s \cdot \left( \frac{T_s}{T_r} \right) + RPM_c \frac{(T_r - T_s)}{T_r} = +RPM_r$$

Since $T_r$ (the number of teeth in the ring gear) is made twice $T_s$ (the number of teeth in the sun gear), equation (2) simplifies to:

$$(3) \quad +\tfrac{1}{2} RPM_s \quad +\tfrac{1}{2} RPM_c = + RPM_r$$

Equation (3) shows that the speed of the sun gear and the carrier are weighted equally and moreover, these two speeds are additive so that the output speed (speed of the ring gear) is proportional to the sum of the speeds of the sun and carrier gears - and in that sense represents the average of the speeds of the sun and carrier gears.

CLAIMS

1. A multi-range synchronous shifting hydromechanical drive and steering transmission (FIG.1) comprising: input gear means (12,15,17) for the transfer of power from a power source; a right and a left three-element differential output device (23, 25) each having an output shaft (14,16) attached to a first element (23c,25c) of the associated one of said output devices; an infinitely variable drive and steer component (18,20) connected to said input gear means including right and left variable speed motor means (B), means (19,21c) attaching said right and left motor means (B) respectively to a second element (23s,25s) of said respective right and left differential output devices (23,25), and means (A) for varying the speeds of said right and left motor means; means (11,38,42,44,43) for selectively immobilizing the third elements (23r,25r) of said right and left differential output devices (23,25) to provide a first speed range; a first selectively engageable mechanical means (46,48,43,44,42) interconnecting said input gear means (12) and said third elements (23r,25r) of said right and left differential output devices (23, 25) for driving said third elements at a speed that is directly proportional to the speed of said input gear means to provide a third speed range; a second selectively engageable mechanical means interconnecting said input gear means (12) and said third elements (23r,25r) of said right and left differential output devices (23, 25) including: reduction gear means (28) connected to said input gear means (12), a first selectively engageable means (31) associated with said reduction gear means (28) and operable to engage said reduction gear means (28) in a first mode for producing a first movement which is proportional to the speed of said input gear means (12), averaging means (21) attached to the two said motor means (18B,20B) for providing a movement which is the average speed of said right and left motor means, a three-element differential additional range device (36) connected (at 36c) to said reduction gear means (28) and connected (at 41) to said averaging means (21) and connected at (38, 42,44,43) for driving said third elements (23r,25r) of said right and left differential output devices (23,25) at a speed which is a combined function of the movements produced by said reduction gear means (28) and the average (at 21) of the speeds of said motor means (18B,20B) to provide a second speed range; characterized by the provision of a second selectively engageable means (7) associated with said reduction gear means (28) and operable to selectively engage said reduction gear means (28) to said input gear means (12) in a second mode for producing a second movement which is proportional to the speed of said input gear means (12) to thereby drive said three element differential additional range device (36) in combination with the drive of said additional range device (36) by said averaging means (21) to provide a fourth - speed range at said differential output device (23,25).

0004427

35-OR-771

- 17 -

2. The transmission of claim 1 further characterized in the provision that said reduction gear means (28)
is selectively engageable in said second mode to produce
a speed which is the same as the speed of said input
gear means.

3. The transmission of claim 1 or claim 2 further
characterized in that said reduction gear means (28)
includes: a drive gear (28s) connected to said input
gear means (12), a gear train element (28c) connected
to one element (36c) of said three-element differential
additional range device (36), selectively engageable
drive means (7) for connecting said drive gear (28s) and
said gear train element (28c) to cause said gear train
element to be driven at the same speed as said input
gear means.

4. A transmission as claimed in any of the preceding claims further characterized in that said reduction gear means (28) includes: a three-element planetary
gear set having: a sun gear element (28s) driven by said
input gear means (12), a planetary carrier element (28c)
attached to a first element (36c) of said three-element
differential additional range device (36), and a ring
gear element (28r); and said second selectively engageable means (7) comprises a clutch for securing together
two of said elements (28s,28c,28r) of said reduction
gear means (28) to cause said planetary gear set (28)
to rotate as a unit.

5. A transmission as claimed in claim 4 further characterized in that said averaging means (21) includes a three-element differential device having first (21r) and second (21c) elements each driven by one of said hydraulic motors (18B,20B) and having a third element (21r) operable as an output element; said transmission including an interface gear train (41,40) interconnecting said third element (21r) of said averaging means (21) and a second element (36s) of said three-element differential additional range device (36); the gear ratios of said interface gear train (41,40) being matched to the gear ratios of said input gear means (12,15,17) and to the speed reduction of said infinitely variable drive and steer component to provide the same speed on said second element (36s) of said differential additional range device as said sun gear element (28s) of said reduction gear means (28) when said infinitely variable drive and steer component (18,20) is running at maximum allowed positive stroke; said first selectively engageable mechanical means (46,48,43,44,42) being connected (at 38) to a third element (36r) of said three-element differential additional range device (36) and being operable when providing the third speed range to rotate said third element (36r) of said differential additional range device (36) at the same speed as said sun gear element (28s) of said reduction gear means (28) to thereby provide the same speeds to all three elements of said differential additional range device (36) under the above-mentioned condition when said infinitely variable drive and steer component (18,20) is running at maximum allowed positive stroke to thereby provide a matching of the rotational speeds of said first element (36c) of said three-element differential additional range device (36) and said planetary carrier element (28c) of said reduction gear means and said sun gear element (28s) of said reduction gear means to permit synchronous engagement of said second selectively engageable clutch means (7) to commence the fourth range at the top speed of said third range.

Fig.1.

Fig.2.

FIG.5

FIG.6

0004427

## European Patent Office

## EUROPEAN SEARCH REPORT

Application number

EP 79 300 359.1

| Category | DOCUMENTS CONSIDERED TO BE RELEVANT | | CLASSIFICATION OF THE APPLICATION (Int. Cl.²) |
|---|---|---|---|
| | Citation of document with indication, where appropriate, of relevant passages | Relevant to claim | |
| | US – A – 3 545 303 (J.F. WHELAHAN) <br> * column 4, lines 15 to 23; fig. 1 * <br> –– | 1,2,5 | F 16 H 47/04 <br> B 62 D 11/12 |
| | US – A – 3 496 803 (J.F. WHELAHAN) <br> * column 10, line 56 to column 11, line 4; fig. 1 * <br> –– | 1,2,5 | |
| | US – A – 3 398 605 (R. AINSWORTH et al.) <br> * column 4, lines 32 to 40; fig. 1 * <br> –– | 1,2,5 | TECHNICAL FIELDS SEARCHED (Int.Cl.²) |
| A | US – A – 3 938 604 (KUGLER et al.) <br> * complete document * <br> –– | 1 | B 62 D 11/00 <br> F 16 H 47/00 |
| A | DE – A – 1 804 188 (GENERAL MOTORS) <br> * complete document * <br> –– | 1 | |
| A | US – A – 3 596 535 (J.C. POLAK) <br> * complete document * <br> –– | 1 | |
| A | US – A – 3 590 658 (R.M. TUCK) <br> * complete document <br> –– | 1 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| A | US – A – 3 583 256 (W.G. LIVEZEY) <br> * complete document * <br> –– | 1 | |
| A | US – A – 3 575 066 (W.G. LIVEZEY et al.) <br> *complete document * <br> –– | 1 | &: member of the same patent family, corresponding document |

| | The present search report has been drawn up for all claims | | |
|---|---|---|---|
| Place of search <br> Berlin | Date of completion of the search <br> 19-06-1979 | Examiner <br> SCHLABBACH | |

EPO Form 1503.1 06.78

European Patent
Office

**EUROPEAN SEARCH REPORT**

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| A | US - A - 3 538 790  (J.C. POLAK)<br><br>* complete document *<br><br>-- | 1 | |
| A | US - A - 3 529 492  (R.M. TUCK)<br><br>* complete document *<br><br>-- | 1 | |
| A | US - A - 3 492 891  (W.G. LIVEZEY)<br><br>* complete document *<br><br>-- | 1 | TECHNICAL FIELDS SEARCHED (Int. Cl.²) |
| A | US - A - 3 426 621  (J.J. MOONEY et al.)<br><br>* complete document *<br><br>-- | 1 | |
| D | US - A - 3 815 698  ( B.O. REED)<br><br>---- | | |

EPO Form 1503.2   06.78